(19) Europäisches Patentamt
European Patent Office
Office européen des brevets

(11) Veröffentlichungsnummer: **0 257 522 B1**

(12) # EUROPÄISCHE PATENTSCHRIFT

(45) Veröffentlichungstag der Patentschrift: **27.01.93**

(51) Int. Cl.5: **C08L 59/00**, C08K 13/02, //(C08K13/02,3:34,5:13,5:52)

(21) Anmeldenummer: **87111938.4**

(22) Anmeldetag: **18.08.87**

Die Akte enthält technische Angaben, die nach dem Eingang der Anmeldung eingereicht wurden und die nicht in dieser Patentschrift enthalten sind.

(54) **Polyoximethylen-Formmassen mit verbesserter thermischer Stabilität, Verfahren zu deren Herstellung und deren Verwendung.**

(30) Priorität: **22.08.86 DE 3628560**

(43) Veröffentlichungstag der Anmeldung:
**02.03.88 Patentblatt 88/09**

(45) Bekanntmachung des Hinweises auf die Patenterteilung:
**27.01.93 Patentblatt 93/04**

(84) Benannte Vertragsstaaten:
**BE DE ES FR GB IT NL SE**

(56) Entgegenhaltungen:
**GB-A- 1 133 490**
**JP-A- 7 972 253**
**JP-A- 8 669 868**

**WIPL ,file Supplier, Derwnt Publications Ltd. London, GB; AN = 86-133881 & JP-A-61069868 (AGENCY OF IND SCI TECH) 10-04-1986 *Zusammenfassung ***

**WPIL, File Supplier, Derwent Publications Ltd., London, GB; AN = 79-53468B, & JP-A-54 072 253 (MITSUBISHI CHEM IND KK) 09-06-1979**

**CHEMICAL ABSTRACTS, Band 68, Nr. 1, 2. Juli 1968, Seite 5856, Zusammenfassung 60468x Columbus, Ohio, US & JP-A-67 19 188 (TOYO RAYON CO., LTD.) 28.09-1964**

**CHEMICAL ABSTRACTS, Band 90, Nr. 16, 16. April 1979, Seite 38, Zusammenfassung 122560m Columbus, Ohio, US & JP-A-78 133 249 (RIKEN VITAMIN OIL CO., LTD.) 20-11-1978**

(73) Patentinhaber: **BASF Aktiengesellschaft**
**Carl-Bosch-Strasse 38**
**W-6700 Ludwigshafen(DE)**

(72) Erfinder: **Walter, Manfred, Dr.**
**Hans-Purrmann-Allee 18**
**W-6720 Speyer(DE)**
Erfinder: **Schuette, Wilhelm, Dr.**
**Frankstrasse 5**
**W-6720 Speyer(DE)**
Erfinder: **Goerrissen, Heiner, Dr.**
**Berner Weg 24**
**W-6700 Ludwigshafen(DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

EP 0 257 522 B1

## Beschreibung

Polyoximethylen-homo- und/oder -copolymerisate sind seit langem bekannt. Die Polymerisate zeichnen sich durch eine Anzahl ausgezeichneter Eigenschaften aus, so daß sie für die verschiedensten technischen Anwendungen geeignet sind. Dennoch hat es nicht an Versuchen gefehlt, Mittel zur Verbesserung der Verarbeitbarkeit, z.B. der Fließfähigkeit. Erstarrungszeit u.a. und/oder zur Verbesserung der mechanischen Eigenschaften sowie der Dimensionsstabilität von aus derartigen Polymerisaten hergestellten Formkörpern zu finden.

Aus der DE-A-1 208 490 (GB-A-999 422) ist beispielsweise bekannt, Oximethylenpolymerisate, die Metalle, Metalloxide, Metallcarbonate, Metallsilikate, Metallsulfide, Kohlenstoff, Kieselsäure und/oder Bor und gegebenenfalls Glas- und Asbestfasern enthalten, zum Herstellen von Verbundmaterialien zu verwenden.

Mischungen aus Oximethylenpolymerisaten und Talkum in einer Menge von 0,0001 bis 0,5 Gew.%, bezogen auf das Gewicht des Oximethylenpolymerisats, werden in der GB-A-11 33 490 beschrieben. Die Produkte weisen eine erhöhte Dimensionsstabilität auf, doch geht diese mit einer Verschlechterung der Schlagzähigkeit und eventuell einer Änderung der Verarbeitbarkeit einher.

Nach Angaben der DE-A-23 19 359 (US-A-3 775 363) zeichnen sich Formmassen, die bestehen aus 98 bis 25 Gew.% Oximethylencopolymerisaten und 2 bis 75 Gew.% nadelförmigem Calciummetasilikat, wobei die Gew.% bezogen sind auf die Gesamtmasse, durch eine verbesserte Verarbeitbarkeit, Maßhaltigkeit und Wärmealterungseigenschaften aus.

Aus der JP-A 54/72 253 und der JP-A 61/69 868 sind Abmischungen von Thermoplasten mit Calciumsilikaten bekannt, welche ein $MeO/SiO_2$-Verhältnis von 1:1 bis 3:2 aufweisen.

Ferner ist aus der JP-A 78/133 249 und der JP-A 67/19 199 die Verwendung von Erdalkaliglycerophosphaten in Kombination mit anderen Verbindungen wie Stabilisierung von Polyolefinen bzw. Polyamiden bekannt.

Zum Stande der Technik gehört ferner, Polyoximethylen-Formmassen durch geeignete Additive zu stabilisieren. Zu diesem Zwecke werden Polyoximethylen-Formmassen Antioxidantien, wie z.B. sterisch gehinderte Phenolderivate zugesetzt. Derartige Phenolderivate sind z.B. in der DE-A-27 02 661 (US-A-4 360 617) zusammengestellt. Nach Angaben der EP-A-19 761 werden glasfaserverstärkten Polyoximethylen-Formmassen zur Verbesserung der Schlagzähigkeit Alkoximethylmelamine einverleibt. Polyoximethylen-Formmassen, die gegen die Einwirkung von Wärme im Temperaturbereich von 100 bis 150 °C über einen längeren Zeitraum stabilisiert sind, werden nach Angaben der EP-A-52 740 (US-A-4 386 178) durch den Zusatz eines teilveretherten speziellen Melamin-Formaldehyd-Kondensationsproduktes erhalten. Die DE-A-3 011 280 (US-A-4 342 680) beschreibt stabilisierte Oximethylencopolymermassen, die als Stabilisator eine Mischung aus mindestens einem aminsubstituierten Triazin, mindestens einem sterisch gehinderten Phenol und mindestens einer metallhaltigen Verbindung enthalten. Die metallhaltigen Verbindungen bestehen hierbei vorzugsweise aus Kalium-, Calcium-, Magnesiumhydroxid oder Magnesiumcarbonat.

Trotz dieser Maßnahmen besitzen bekannte Polyoximethylen-Formmassen jedoch für einige Anwendungen eine nicht ausreichende thermische Stabilität, die die Verarbeitung zu Formkörpern nachteilig beeinflußt und beispielsweise zu Ablagerungen am Formwerkzeug oder zur Verschlechterung der Entformbarkeit beitragen und/oder beim späteren Gebrauch der Formkörper zu Verfärbungen und einer Verminderung der mechanischen Eigenschaften führt. Nachteilig ist ferner, daß die Mischungen noch Formaldehydaddukte enthalten können, welche bei der Verarbeitung bei erhöhten Temperaturen durch Formaldehydabspaltung zu Geruchsbelästigungen führen können.

Die Aufgabe der vorliegenden Erfindung bestand darin, die Thermostabilität von Polyoximethylen-Formmassen zu verbessern und die Verfärbungsneigung zu verringern sowie gleichzeitig einen eventuell vorhandenen Restformaldehydgehalt zu minimieren.

Diese Aufgabe konnte überraschenderweise durch den Zusatz speziell ausgewählter Additive gelöst werden.

Gegenstand der Erfindung sind somit Polyoximethylen-Formmassen aus

(A) mindestens einem Polyoximethylen-homo- und/oder -copolymerisat mit einem Molekulargewicht (Zahlenmittel) $M_n$ von 2000 bis 100 000 und einem MFI von 0,5 bis 200 (190 °C/21,17 N),

(B) mindestens einem Antioxidans mit einer sterisch gehinderten phenolischen Struktur und

(C) gegebenenfalls Zusatzstoffen,

(D) Additive aus mindestens einem Erdalkalimetallsilikat, einem Erdalkalimetallglycerophosphat oder einer Mischung aus mindestens zwei der genannten Verbindungen, wobei die Erdalkalisilikate die chemische Formel

$MeO \cdot x\, SiO_2 \cdot n\, H_2O$

besitzen, in der bedeuten:

| | |
|---|---|
| Me | ein Erdalkalimetall, |
| x | eine Zahl von 1,4 bis 10 und |
| n | eine Zahl gleich oder größer als 0. |

Gegenstände der Erfindung sind ferner ein Verfahren zur Herstellung von Polyoximethylen-Formmassen nach Anspruch 1 gemäß Anspruch 7 und die Verwendung dieser Polyoximethylen-Formmassen zur Herstellung von Folien oder vorzugsweise Formkörpern gemäß Anspruch 8.

Zur Erzielung einer sehr guten Thermostabilität verbunden mit einer geringen Verfärbungstendenz und minimiertem Formaldehydgehalt enthalten die Polyoximethylen-Formmassen zweckmäßigerweise 0,002 bis 2,0 Gew.%, vorzugsweise 0,005 bis 0,5 Gew.% und insbesondere 0,01 bis 0,3 Gew.%, bezogen auf das Gewicht der Aufbaukomponente (A) eines oder mehrerer der Erdalkalisilikate und/oder Erdalkaliglycerophosphate. Als Erdalkalimetalle zur Bildung der Silikate und Glycerophosphate haben sich vorzugsweise Calcium und insbesondere Magnesium vorzüglich bewährt. Anwendung finden zweckmäßigerweise Calciumglycerophosphat und vorzugsweise Magnesiumglycerophosphat und/oder Calciumsilikat und vorzugsweise Magnesiumsilikat, wobei die Erdalkalisilikate durch die Formel

$MeO \cdot x\, SiO_2 \cdot n\, H_2O$

beschrieben werden, in der bedeuten

| | |
|---|---|
| Me | ein Erdalkalimetall, vorzugsweise Calcium oder insbesondere Magnesium, |
| x | eine Zahl von 1,4 bis 10, vorzugsweise 1,4 bis 6 und |
| n | eine Zahl gleich oder größer als 0, vorzugsweise 0 bis 8 |

Die Additive werden vorteilhafterweise in feingemahlener Form eingesetzt. Produkte mit einer durchschnittlichen Teilchengröße von kleiner als 100 µm, vorzugsweise von kleiner als 50 µm sind besonders gut geeignet.

Die vorzugsweise Anwendung findenden Calcium- und Magnesiumsilikate und/oder Calcium- und Magnesiumglycerophosphate können beispielsweise durch die folgenden Kenndaten näher spezifiziert werden:

Calcium- bzw. Magnesiumsilikat:

Gehalt an CaO bzw. MgO: 4 bis 32 Gew.%, vorzugsweise 8 bis 30 Gew.% und insbesondere 12 bis 25 Gew.%,

Verhältnis $SiO_2$ : CaO bzw. $SiO_2$ : MgO (mol/mol): 1,4 bis 10, vorzugsweise 1,4 bis 6 und insbesondere 1,5 bis 4,

Schüttgewicht: 10 bis 80 g/100 ml, vorzugsweise 10 bis 40 g/100 ml und durchschnittliche Korngröße: kleiner als 100 µm, vorzugsweise kleiner als 50 µm und

Calcium- bzw. Magnesiumglycerophosphate:

Gehalt an CaO bzw. MgO: größer als 70 Gew.%, vorzugsweise größer als 80 Gew.%,

Glührückstand: 45 bis 65 Gew.%,

Schmelzpunkt: größer als 300 °C und

durchschnittliche Korngröße: kleiner als 100 µm, vorzugsweise kleiner als 50 µm.

Zu den für die erfindungsgemäßen Polyoximethylen-Formmassen verwendbaren Aufbaukomponenten (A) und (B) sowie gegebenenfalls (C) ist folgendes auszuführen:

A) Geeignete Polyoximethylene (A) im Sinne der vorliegenden Erfindung sind Homopolymerisate des Formaldehyds oder Copolymerisate des Formaldehyds sowie des Trioxans mit cyclischen und/oder linearen Formalen, wie Butandiolformal oder Epoxiden wie Ethylen- oder Propylenoxid. Die Homopolymerisate haben in der Regel thermisch stabile Endgruppen, wie Ester- oder Ethergruppen. Die Copolymerisate des Formaldehyds oder des Trioxans weisen vorteilhaft mehr als 50 %, insbesondere mehr als 75 % Oximethylengruppen auf. Besonders bewährt haben sich Copolymerisate, in denen mindestens 0,1 % Gruppen des Comonomeren enthalten sind, die mindestens zwei benachbarte Kohlenstoffatome in der Kette haben. Besonders technische Bedeutung haben Polyoximethylene erlangt, die 1 bis 10 Gew.% Comonomere enthalten. Solche Copolymerisate sind in an sich bekannter Weise durch kationische Copolymerisation von Trioxan mit geeigneten Comonomeren wie cyclischen Ethern oder Acetalen, z.B. Ethylenoxid, 1,3-Dioxolan, 1,3-Dioxan, 1,3-Dioxacycloheptan oder mit linearen Oligo- oder Polyformalen, wie Polydioxolan oder Polybutandiolformal erhältlich. Die verwendeten Polyoximethylene haben ein Molekulargewicht (Zahlenmittel) $M_n$ von 2000 bis 100.000, vorzugsweise von 10.000 bis 100.000 und einem MFI bei 190 °C , 21,17 N nach DIN 53 735 von 0,5 bis 200, vorzugsweise von 1 bis 50.

Besondere Bedeutung haben Polymerisate, die aus Trioxan und 1 bis 10 Mol.% Ethylenoxid, 1,3-Dioxolan oder Butandiolformal aufgebaut sind, erlangt. Die erfindungsgemäßen Formmassen enthalten, wie bereits dargelegt wurde, zweckmäßigerweise 40 bis 95 Gew.%, bezogen auf das Gewicht der Komponenten (A) und (B) , mindestens eines Polyoximethylens.

Als zusätzliche Comonomere für Trioxan werden gegebenenfalls noch Verbindungen mit mehreren polymerisierbaren Gruppen im Molekül, z.B. Alkylglycidylformale, Polyglykoldiglycidylether, Alkandioldiglycidylether oder Bis-(alkantriol)-triformale verwendet, und zwar in einer Menge von 0,05 bis 5 Gew.%, vorzugsweise 0,1 bis 2 Gew.%, bezogen auf die Gesamtmonomermenge.

B) Als Antioxidantien (B) mit einer sterisch gehinderten phenolischen Struktur, die zweckmäßigerweise in Kombination mit Costabilisatoren, gegen den Einfluß von Wärme eingesetzt weren, kommen vorteilhafterweise Verbindungen mit der Formel

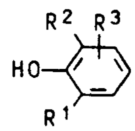

in Betracht, in der bedeuten:

$R^1$ und $R^2$ eine Alkylgruppe, eine substituierte Alkylgruppe oder eine substituierte Triazolgruppe, wobei die Reste $R^1$ und $R^2$ gleich oder verschieden sein können und

$R^3$ eine Alkylgruppe, eine substituierte Alkylgruppe, eine Alkoxigruppe oder eine substituierte Aminogruppe.

Antioxidantien der genannten Art werden beispielsweise beschrieben in der DE-A-27 02 661 (US-A-4 360 617).

Beispielhaft genannt seien:

2,2'-Methylen-bis-(4-methyl-6-tert.-butylphenol),

1,6-Hexandiol-bis-[3-(3,5-di-tert.-butyl-4-hydroxyphenyl)-propionat], Pentaerythrityl-tetrakis-[3-(3,5-di-tert.-butyl-4-hydroxyphenyl)-propionat], Distearyl-3,5-di-tert.-butyl-4-hydroxybenzylphosphonat, 2,6,7-Trioxa-1-phosphabicyclo-[2.2.2]-oct-4-yl-methyl-3,5-di-tert.-butyl-4-hydroxyhydrocinnamat, 3,5-Di-tert.-butyl-4-hydroxyphenyl-3,5-distearyl-thiotriazylamin, 2-(2'-Hydroxy-3',5'-di-tert.-butylphenyl)-5-chlorbenzotriazol, 2,6-Di-tert.-butyl-4-hydroxymethylphenol, 1,3,5-Trimethyl-2,4,6-tris-(3,5-di-tert.-butyl-4-hydroxybenzyl)-benzol, 4,4'-Methylen-bis-(2,6-di-tert.-butylphenol),3,5-Di-tert.-butyl-4-hydroxybenzyl-dimethylamin und N,N'-Hexamethylenbis-3.5-di-tert.-butyl-4-hydroxyhydrocinnamid. Als besonders wirksam erwiesen haben sich und daher vorzugsweise verwendet werden 2,2'-Methylen-bis-(4-methyl-6-tert.-butylphenol), 1,6-Hexandiol-bis-[3-(3,5-di-tert.-butyl-4-hydroxyphenyl)-propionat] und Pentaerythrityl-tetrakis-[3-(3,5-di-tert.-butyl-4-hydroxyphenyl)-propionat].

Die Antioxidantien (B), die einzeln oder als Gemische eingesetzt werden können, werden zweckmäßigerweise in einer Menge von 0,05 bis 2 Gew.%, vorzugsweise von 0,1 bis 1,0 Gew.%, bezogen auf das Gewicht der Aufbaukomponente (A) verwendet.

C) Die erfindungsgemäßen Polyoximethylen-Formmassen können neben den erfindungswesentlichen Aufbaukomponenten (A), (B) und (D) gegebenenfalls Zusatzstoffe (C) enthalten.

Als geeignete, gegebenenfalls mitverwendbare Zusatzstoffe (C) kommen beispielsweise in Betracht: Stabilisatoren, verstärkend wirkende Füllstoffe, Nukleierungsmittel, Antistatika, Licht- und Flammschutzmittel, Gleit- und Schmiermittel, Weichmacher, Pigmente, Farbstoffe, optische Aufheller, innere Trennmittel und dergleichen.

Als Costabilisatoren gegen den Einfluß

von Wärme eignen sich insbesondere Polyamide, Amide mehrbasiger Carbonsäuren, Amidine, z.B. Dicyandiamid, Hydrazine, Harnstoffe, Poly-(N-vinyllactame) und Erdalkalisalze von aliphatischen, vorzugsweise hydroxylgruppenhaltigen, ein- bis dreibasigen Carbonsäuren mit 2 bis 20 Kohlenstoffatomen, z.B. Calciumstearat, Calciumrizinoleat, Calciumlactat und Calciumcitrat. Als Lichtstabilisatoren sind beispielsweise α-Hydroxybenzophenonderivate und Benzotriazolderivate geeignet. Die Costabilisatoren werden zumeist in einer Menge von insgesamt 0,1 bis 5 Gew.%, vorzugsweise 0,5 bis 3 Gew.%, bezogen auf das Gewicht der Aufbaukomponente (A) verwendet.

Zur Herstellung der erfindungsgemäßen Polyoximethylen-Formmassen können die Aufbaukomponenten (A), (B)

und (D) sowie gegebenenfalls (C) einzeln oder in Form von einer oder mehreren vorgefertigten Mischungen einer geeigneten Mischvorrichtung zugeführt und dort zweckmäßigerweise bei erhöhten Temperaturen,

beispielsweise von 150 bis 260 °C gemischt werden. Nach dem zweckmäßigsten und daher vorzugsweise angewandten Herstellungsverfahren, werden das Polyoximethylen-homo- und/oder -copolymerisat (A), das insbesondere auch in Form eines mit untergeordneten Mengen Trioxan und/oder anderen instabilen Addukten verunreinigten Rohmaterials eingesetzt werden kann, die Mischung der Antioxidantien (B), das Additiv (D) und gegebenenfalls die Zusatzstoffe (C) bei Temperaturen von 0 bis 150 °C, vorzugsweise von 0 bis 50 °C intensiv gemischt. Die Mischung wird in einen Extruder, vorzugsweise einen Doppelschneckenextruder, der gegebenenfalls mit einer Entgasungsvorrichtung ausgestattet ist, eingebracht, bei Temperaturen von 150 bis 260 °C, vorzugsweise 200 bis 250 °C zusammengeschmolzen und entgast, die Schmelze extrudiert, abgekühlt und granuliert. Die erhaltenen Granulate können zwischengelagert oder direkt zur Herstellung von Folien oder vorzugsweise Formkörper verwendet werden.

Die erfindungsgemäßen Polyoximethylen-Formmassen besitzen neben guten mechanischen Eigenschaften eine deutlich verbesserte Temperaturbeständigkeit und geringere Verfärbungstendenz sowie einen verringerten Restformaldehydgehalt und eignen sich zur Herstellung von beispielsweise Folien oder vorzugsweise Formkörpern nach bekannten Techniken, z.B. durch Blasformen, Extrusion oder Spritzgießen. Die Formkörper finden beispielsweise Verwendung in der Fahrzeug-, Elektrogeräte- und Elektronikindustrie.

Beispiele 1 bis 8 und Vergleichsbeispiele A bis J.

99,7 Gew.-Teile eines rohen Polyoximethylencopolymerisates, hergestellt aus einer Mischung aus 97,3 Gew.% Trioxan und 2,7 Gew.% Butandiolformal, mit einem MFI = 9 g/10 min bei 190 °C und 21,17 N (DIN 53 735), das noch ungefähr 3 Gew.% nicht umgesetztes Trioxan und ungefähr 5 Gew.% thermisch instabiles Addukt enthielt, wurde mit

0,3 Gew.-Teilen 1,6-Hexandiol-bis-3-(3,5-di-tert.-butyl-4-hydroxyphenyl)-propionat, und gegebenenfalls mit 0,02 bis 0,1 Gew.% des Additivs (D) oder

0,1 bis 0,5 Gew.% der Vergleichssubstanz, wobei die Gew.-% bezogen sind auf das Gewicht des rohen Polyoximethylencopolymerisates, in einem Trockenmischer bei einer Temperatur von 23 °C gemischt. Die Mischung wurde mit einer Temperatur von 23 °C in einen Doppelschneckenextruder mit Entgasungsvorrichtung (Typ ZSK 28 der Firma Werner und Pfleiderer, Stuttgart) eingebracht, bei 230 °C homogenisiert und entgast und das homogenisierte Gemisch durch eine Düse als Strang ausgepreßt und granuliert.

Zur Prüfung der Thermostabilität und Verfärbungsneigung wurden bestimmt:

$GV_{N_2}$:

Der Gewichtsverlust in Prozent einer Probe aus 2 g Granulat bei 2- bzw. 8-stündigem Erhitzen auf 220 °C unter Stickstoff,

$GV_{Luft}$: Gewichtsverlust in Prozent einer Probe aus 1 g Granulat bei 2- bzw. 8-stündigem Erhitzen auf 220 °C unter Luft.

Farbe: Farbe der Rückwaage nach dem 8-stündigen

$GV_{N_2}$-Test.

Die verwendeten Additive (D) und die Vergleichssubstanzen, die im folgenden näher spezifiziert werden, sowie deren Mengen und die erhaltenen Ergebnisse sind in den Tabellen 1 und 2 zusammengefaßt.

Erfindungsgemäß verwendete Additive (D)

Calciumsilikat:

| | |
|---|---|
| Gehalt an CaO: | 14 bis 18 Gew.%, |
| Gehalt an $SiO_2$: | 60 bis 68 Gew.%, |
| Schüttdichte: | 15 g/100 ml, |
| Glühverlust: | 15 bis 30 Gew.% und |
| durchschnittliche Korngröße: | < 50 µm. |

Magnesiumtrisilikat:

| | |
|---|---|
| Gehalt an MgO: | > 20 Gew.%, |
| Gehalt an $SiO_2$: | > 45 Gew.%, |
| Verhältnis $SiO_2$:MgO = | 1,5 mol/mol, |
| Schüttdichte: | 25 bis 40 g/100 ml, |
| durchschnittliche Korngröße: | 20 bis 40 µm, |
| Glühverlust: | 20 bis 30 Gew.%. |

Synthetisches Mg-Silicat (Ambosol® der Fa.Societé Nobel Bozel, Puteaux, Frankreich):

| | |
|---|---|
| Gehalt an MgO: | ≧ 14,8 Gew.%, |
| Gehalt an $SiO_2$: | ≧ 59 Gew.%, |
| Verhältnis $SiO_2$:MgO = | 2,7 mol/mol, |
| Schüttdichte: | 20 bis 30 g/100 ml, |
| Glühverlust: | < 25 Gew.%. |

Calciumglycerophosphat:

| | |
|---|---|
| Gehalt an CaO: | > 84 Gew.%, |
| Glührückstand: | 51 bis 57 Gew.%, |
| freie Säure: | <0,2 mmol/g, |
| freie Base: | <0,2 mmol/g, |

Magnesiumglycerophosphat:

| | |
|---|---|
| Gehalt an MgO: | > 82 Gew.%, |
| Glührückstand: | 47 bis 52 Gew.%, |
| freie Säure: | <0,2 mmol/g, |
| freie Base: | <0,2 mmol/g. |

Als Vergleichssubstanzen eingesetzte Wärmestabilisatoren:

Kieselgel:

| | |
|---|---|
| Porenvolumen: | ca. 1 $cm^3$/g, |
| Glühverlust: | 5 bis 8 Gew.% und |
| durchschnittliche Korngröße: | ungefähr 5 µm. |

Aluminium-Magnesium-Silikat:

| | |
|---|---|
| Gehalt an MgO: | ca. 9 Gew.%, |
| Gehalt an $Al_2O_3$: | ca. 6 Gew.%, |
| Verhältnis $SiO_2$: | ca. 56 Gew.%, |
| Schüttdichte: | ca. 16 g/100 ml und |
| Glühverlust: | < 25 Gew.%. |

Polyamid:

Polyamid-Oligomeres mit einem Molekulargewicht von ungefähr 3000, hergestellt aus Caprolactam, Hexamethylendiamin, Adipinsäure und Essigsäure analog den Angaben der US-A-3 960 984, Beispiel 5-4
Talkum (3 Mgo • 4 • $SiO_2$ • $nH_2O$):
Korngröße: kleiner als 20 µm.
Melamin-Formaldehyd-Kondensat:
hergestellt analog den Angaben der DE-A-25 40 207, Beispiel 1.
Calciumstearat:
Korngröße: kleiner als 10 µm
Calcium-12-hydroxistearat:
Korngröße: kleiner als 10 µm.

Tabelle 1

| Beispiel | Additiv D | | $GV_{N_2}$ | | $GV_{Luft}$ | | Farbe |
|---|---|---|---|---|---|---|---|
| | Art | Menge [ Gew.%] | 2 Stdn [ Gew.%] | 8 Stdn [ Gew.%] | 2 Stdn [ Gew.%] | 8 Stdn [ Gew.%] | |
| 1 | Calciumsilikat | 0,1 | 0,32 | 0,83 | 2,10 | 16,40 | weiß |
| 2 | Magnesiumtrisilikat | 0,1 | 0,19 | 0,67 | 1,52 | 13,70 | weiß |
| 3 | synth. Magnesiumsilikat | 0,1 | 0,04 | 0,51 | 1,06 | 9,57 | weiß |
| 4 | synth. Magnesiumsilikat | 0,02 | 0,07 | 0,61 | 1,31 | 10,07 | weiß |
| 5 | Calciumglycerophosphat | 0,1 | 0,20 | 0,87 | 2,07 | 16,30 | weiß |
| 6 | Magnesiumglycerophosphat | 0,1 | 0,13 | 0,62 | 1,49 | 13,02 | weiß |
| 7 | Magnesiumglycerophosphat | 0,05 | 0,19 | 0,60 | 1,31 | 12,91 | weiß |
| 8 | Magnesiumglycerophosphat | 0,02 | 0,04 | 0,51 | 1,68 | 14,12 | weiß |

Tabelle 2

| Vergleichsbeispiel | Vergleichssubstanz Art | Menge [Gew.%] | $GV_{N_2}$ 2 Stdn [Gew.%] | 8 Stdn [Gew.%] | $GV_{Luft}$ 2 Stdn [Gew.%] | 8 Stdn [Gew.%] | Farbe |
|---|---|---|---|---|---|---|---|
| A | - | - | 0,64 | 4,52 | 4,39 | 20,71 | weiß |
| B | Kieselgel | 0,1 | 2,16 | 10,66 | 4,48 | 27,11 | weiß |
| C | Aluminium-Magnesiumsilikat | 0,1 | 3,01 | 7,87 | 12,17 | 31,40 | weiß |
| D | Polyamid | 0,1 | 0,28 | 0,84 | 2,38 | 17,70 | beige |
| E | Polyamid | 0,5 | 0,21 | 0,71 | 2,19 | 15,97 | beige |
| F | Calciumstearat | 0,1 | 0,17 | 0,66 | 1,91 | 16,95 | beige |
| G | Calcium-12-hydroxistearat | 0,1 | 0,12 | 0,54 | 1,80 | 18,18 | gelb |
| H | Calcium-12-hydroxistearat | 0,4 | 0,10 | 0,74 | 1,45 | 17,76 | gelb |
| I | Talkum | 0,1 | 0,60 | 2,16 | 6,97 | 22,50 | beige |
| J | Melamin-Formaldehyd-Kondensat | 0,5 | 0,44 | 3,21 | 2,47 | 17,35 | beige |

## Patentansprüche

**1.** Polyoximethylen-Formmassen aus

(A) mindestens einem Polyoximethylen-homo- und/oder -copolymerisat mit einem Molekulargewicht (Zahlenmittel) $M_n$ von 2000 bis 100 000 und einem MFI von 0,5 bis 200 (190 °C, 21,17 N),

(B) mindestens einem Antioxidans mit einer sterisch gehinderten phenolischen Struktur und
(C) gegebenenfalls Zusatzstoffen und
(D) Additiven aus mindestens einem Erdalkalisilikat und/oder Erdalkaliglycerophosphat, wobei die Erdalkalisilikate die chemische Formel

$MeO \cdot x\ SiO_2 \cdot n\ H_2O$

besitzen, in der bedeuten:

| | |
|---|---|
| Me | ein Erdalkalimetall, |
| x | eine Zahl von 1,4 bis 10 und |
| n | eine Zahl gleich oder größer als 0. |

**2.** Polyoximethylen-Formmassen nach Anspruch 1, dadurch gekennzeichnet, daß diese das Additiv (D) in einer Menge von 0,002 bis 2 Gew.%, bezogen auf das Gewicht der Aufbaukomponente (A) enthalten.

**3.** Polyoximethylen-Formmassen nach Anspruch 1, dadurch gekennzeichnet, daß die Silikate und Glycerophosphate als Erdalkalimetalle Calcium oder vorzugsweise Magnesium enthalten.

**4.** Polyoximethylen-Formmassen nach Anspruch 1, dadurch gekennzeichnet, daß diese als Additiv (D) Calcium- oder vorzugsweise Magnesiumsilikate der Formel $MeO \cdot x\ SiO_2 \cdot n\ H_2O$ enthalten, in der Me, x und n die obengenannte Bedeutung besitzen.

**5.** Polyoximethylen-Formmassen nach Anspruch 1, dadurch gekennzeichnet, daß diese als Additiv (D) Calcium- oder vorzugsweise Magnesiumglycerophosphat enthalten.

**6.** Polyoximethylen-Formmassen nach Anspruch 1, dadurch gekennzeichnet, daß diese mindestens ein Antioxidans mit einer sterisch gehinderten phenolischen Struktur in einer Mengen von 0,05 bis 2 Gew.%, bezogen auf das Gewicht der Aufbaukomponente (A) enthalten.

**7.** Verfahren zur Herstellung von Polyoximethylen-Formmassen gemäß Anspruch 1, dadurch gekennzeichnet, daß man die Aufbaukomponenten (A), (B), (D) und gegebenenfalls (C) in einem Extruder bei Temperaturen von 150 bis 260°C zusammenschmilzt, die Schmelze extrudiert und anschließend granuliert.

**8.** Verwendung der Polyoximethylen-Formmassen nach Anspruch 1 zur Herstellung von Folien oder vorzugsweise Formkörpern.

**Claims**

**1.** A polyoxymethylene molding material comprising
(A) at least one polyoxymethylene homopolymer or copolymer having a number average molecular weight $M_n$ of from 2000 to 100,000 and an MFI of from 0.5 to 200 (190°C, 21.17 N),
(B) at least one antioxidant having a sterically hindered phenolic structure,
(C) optionally added substances, and
(D) additives comprising at least one alkaline earth metal silicate or glycerophosphate, the alkaline earth metal silicate being of the chemical formula

$MeO \cdot x\ SiO_2 \cdot n\ H_2O$

where Me is an alkaline earth metal, x is from 1.4 to 10 and n is greater than or equal to 0.

**2.** A polyoxymethylene molding material as claimed in claim 1, which contains the additive (D) in an amount of from 0.002 to 2% by weight, based on the weight of component (A).

**3.** A polyoxymethylene molding material as claimed in claim 1, wherein the silicates and glycerophosphates contain calcium or, preferably, magnesium as the alkaline earth metal.

**4.** A polyoxymethylene molding material as claimed in claim 1, which contains, as additive (D), calcium

silicates or, preferably, magnesium silicates of the formula $MeO \cdot x\ SiO_2 \cdot n\ H_2O$, where Me, x and n are each as defined above.

**5.** A polyoxymethylene molding material as claimed in claim 1, which contains, as additive (D), calcium glycerophosphate or, preferably, magnesium glycerophosphate.

**6.** A polyoxymethylene molding material as claimed in claim 1, which contains at least one antioxidant having a sterically hindered phenolic structure in an amount of from 0.05 to 2% by weight, based on the weight of component (A).

**7.** A process for preparing a polyoxymethylene molding material as claimed in claim 1, wherein components (A), (B), (D) and optionally (C) are melted in an extruder at from 150 to 260°C and the melt is extruded and then granulated.

**8.** Use of a polyoxymethylene molding material as claimed in claim 1 for the production of films or, preferably, moldings.

**Revendications**

**1.** Masses à mouler de polyoxyméthylène se composant de

(A) au moins un homo- et/au copolymère de polyoxyméthylène ayant un poids moléculaire (moyenne en nombre) $M_n$ de 2000 à 100 000 et un MFI de 0,5 à 200 (190°C, 21,17 N),
(B) au moins un antioxydant ayant une structure phénolique à empêchement stérique et
(C) éventuellement des additifs et
(D) des additifs composés d'au moins un silicate alcalino-terreux et/au un glycérophosphate alcalino-terreux, le silicate alcalino-terreux ayant la formule chimique

$MeO \cdot x\ SiO_2 \cdot n\ H_2O$

dans laquelle

| | |
|---|---|
| Me | représente un métal alcalino-terreux |
| x | représente un nombre de 1,4 à 10 et |
| n | représente un nombre égal ou supérieur à 0. |

**2.** Masses à mouler à base de polyoxyméthylène selon la revendication 1, caractérisées en ce qu'elles contiennent l'additif (D) à raison de 0,002 à 2 % en poids par rapport au poids du composant (A).

**3.** Masses à mouler à base de polyoxyméthylène selon la revendication 1, caractérisées en ce que les silicates et glycérophosphates contiennent comme métal alcalino-terreux du calcium ou de préférence du magnésium.

**4.** Masses à mouler à base de polyoxyméthylène selon la revendication 1, caractérisées en ce qu'elles contiennent comme additif (D) du silicate de calcium ou de préférence de magnésium de formule

$MeO \cdot x\ SiO_2 \cdot n\ H_2O$

dans laquelle Me, x et n ont les significations données précédemment.

**5.** Masses à mouler à base de polyoxyméthylène selon la revendication 1, caractérisées en ce qu'elles contiennent comme additif (D) du glycérophosphate de calcium ou de préférence de magnésium.

**6.** Masses à mouler à base de polyoxyméthylène selon la revendication 1, caractérisées en ce qu'elles contiennent au moins un anti-oxydant ayant une structure phénolique à empêchement stérique à raison de 0,05 à 2 % en poids par rapport au poids du composent (A).

**7.** Procédé de préparation de masses à mouler à base de polyoxyméthylène selon la revendication 1, caractérisé en ce que l'on fond ensemble les composants (A), (B), (D) et éventuellement (C) dans une extrudeuse à une température de 150 à 260°C, on extrude de la masse fondue puis on la granule.

8. Utilisation des masses à mouler à base de polyoxyméthylène selon la revendication 1 pour la préparation de feuilles ou de préférence d'articles moulés.